## Europäisches Patentamt

## European Patent Office

## Office européen des brevets

(11) Veröffentlichungsnummer: **0 144 848**
**B1**

(12) **EUROPÄISCHE PATENTSCHRIFT**

(45) Veröffentlichungstag der Patentschrift:
**20.07.88**

(21) Anmeldenummer: **84113960.3**

(22) Anmeldetag: **19.11.84**

(51) Int. Cl.⁴: **H 02 P 1/16,** H 02 K 17/34

(54) Verfahren zum Anfahren einer untersynchronen Stromrichterkaskade.

(30) Priorität: **12.12.83 DE 3344808**

(43) Veröffentlichungstag der Anmeldung:
**19.06.85 Patentblatt 85/25**

(45) Bekanntmachung des Hinweises auf die Patenterteilung:
**20.07.88 Patentblatt 88/29**

(84) Benannte Vertragsstaaten:
**BE DE FR SE**

(56) Entgegenhaltungen:
**CH-A-417 756**
**CH-A-524 277**
**DE-B-1 148 634**

**BULL.SEV/VSE 65, Heft 2, 26. Januar 1974, Seiten 85-96; H. PISECKER: "Schaltfeste untersynchrone Stromrichterkaskade"**

(73) Patentinhaber: **BBC Brown Boveri AG, Haselstrasse, CH- 5401 Baden (CH)**

(72) Erfinder: **Zürcher, Urs, Viktoriastrasse 44, CH- 3013 Bern (CH)**

**Beschreibung**

Bei der Erfindung wird ausgegangen von einem Verfahren zum Anfahren einer untersynchronen Stromrichterkaskade nach dem Oberbegriff des Patentanspruchs 1.

Unter einer untersynchronen Stromrichterkaskade versteht man einen Stromrichterantrieb aus einer Asynchronmaschine mit Schleifringläufer, bei der die im untersynchronen Betrieb freiwerdende Schlupfleistung über einen Umrichter dem Netz wieder zugeführt wird. Derartige Stromrichterkaskaden erweisen sich zum Antrieb von Pumpen, insbesondere von grossen Kesselspeisepumpen, Ventilatoren und Verdichtern im Leistungsbereich von etwa 2 MW bis 20 MW besonders vorteilhaft. Die Dimensionierungsleistung des Umrichters beträgt bei einem Einstellbereich von 50 % bis 100 % der Nenndrehzahl nur etwa die Hälfte der Antriebsleistung der Asynchronmaschine, so daß dieses Antriebssystem bei gutem Wirkungsgrad preisgünstig ist.

Mit dem Oberbegriff nimmt die Erfindung auf einen Stand der Technik von Verfahren zum Anfahren einer untersynchronen Stromrichterkaskade Bezug, wie er in der DE-B-1 148 634 beschrieben ist. Dort ist eine Anordnung zum selbsttätigen Anlassen und zur Drehzahlregelung eines Drehstromasynchronmotors mit Schleifringläufer angegeben, dessen Primärwicklung an ein Drehstromnetz angeschlossen ist und dessen Schlupfenergie über Schleifringe einem Gleichrichtersatz zugeführt wird, welcher über einen Gleichstromzwischenkreis mit einem steuerbaren Stromrichter in Reihe geschaltet ist. Zwischen den Schleifringen und dem Gleichrichtersatz sind stufenweise veränderbare Anfahrwiderstände angeordnet. Diese Anordnung ermöglicht einen Anlauf des Motors mit annähernd konstantem Strom. Beim Anlauf wird die im Läufer induzierte Spannung kleiner, so daß auch dementsprechend die Gegenspannung durch eine kleinere Aussteuerung des steuerbaren Stromrichters vermindert werden muss. Sobald die Gegenspannung des steuerbaren Stromrichters annähernd Null ist, wird eine Stufe der Anfahrwiderstände ausgeschaltet, und der Stromrichter arbeitet wieder mit hoher Wechselrichteraussteuerung.

Nachteilig dabei ist, daß für die drei Wechselstromseitigen Anfahrwiderstände je ein 3poliger Schalter benötigt wird. Der steuerbare Stromrichter kann hierbei nicht in den Gleichrichterbetrieb gesteuert werden, da dies einen Kurzschluss über den Diodengleichrichter ergäbe.

Zum einschlägigen Stand der Technik wird zusätzlich auf die Schweizer Firmenzeitschrift Brown Boveri Mitt. 4/5 (1982) S. 142 bis 150 verwiesen. Dort wird die Asynchronmaschine mit Schleifringläufer der untersynchronen Stromrichterkaskade zunächst über rotorseitige Anlasserwiderstände bis auf die tiefste Betriebsdrehzahl, d.h. etwa 70 % $n_{syn}$ hochgefahren, wobei $n_{syn}$ die Drehfeld- oder Synchrondrehzahl bedeutet. Danach werden die Schleifringe der Asynchronmaschine mittels Rotorumschaltschützen von den Anlasserwiderständen getrennt und mit dem Wechselstromeingang des Gleichrichters eines Umrichters mit Gleichstromzwischenkreis und Zwischenkreisdrossel verbunden. Zur Vermeidung von Überspannungen an den Stromrichtern bei einer Kurzunterbrechung der Netzspannung, insbesondere bei Netzumschaltungen während des Betriebs von einem Eigenbedarf- oder Notnetz auf das Verbundnetz oder umgekehrt, ist ein Schnellschalter im Gleichstromzwischenkreis vorgesehen, der nach Abschaltung des ersten Netzes öffnet und einen zwischenkreiswiderstand in den Zwischenkreis schaltet. Dieser Zwischenkreiswiderstand begrenzt den Strom im Zwischenkreis und somit die Stromrichterbelastung beim Zuschalten des zweiten Netzes. Etwaige Überspannungen werden durch einen Spannungsbegrenzungswiderstand begrenzt, den ein Thyristorschalter bei Überschreiten einer höchstzulässigen Spannungsschwelle parallel zu den stromrichtern an die Zwischenkreisspannung legt.

Aus Bull. SEV/VSE 65 (1974) 2, S. 85-96 und CH-A-524 277 ist eine schaltfeste untersynchrone Stromrichterkaskade bekannt, bei der zur Herabsetzung der durch Netzspannungsänderungen hervorgerufenen Überströme und Überspannungen verhältnismässig niederohmige Schutzwiderstände durch Öffnen eines Gleichstromschnellschalters in den Gleichstromzwischenkreis geschaltet werden. Ebenso kann parallel zum Wechselrichter ein Widerstand über einen Thyristorschalter eingeschaltet werden. Diese Widerstände können für den Hochlauf in den betriebsmässigen Drehzahlbereich herangezogen werden, wodurch ein rotorseitiger Drehstromschalter entbehrlich ist. Dabei bleibt der Wechselrichter bis zum Erreichen einer unteren Grenzdrehzahl des Betriebsbereiches gesperrt bzw. stromlos. Der Zwischenkreisstrom wird beim Hochlauf nicht konstant gehalten, er hängt ab von der Drehzahl des Rotors der Asynchronmaschine.

Die Erfindung, wie sie in den Patentansprüchen gekennzeichnet ist, löst die Aufgabe, ein Verfahren zum Anfahren einer untersynchronen Stromrichterkaskade anzugeben, das einen geringeren Schaltungsaufwand erfordert und somit kostengünstiger ist.

Ein Vorteil der Erfindung besteht darin, daß die für jede Phase des Wechselstroms erforderlichen, in Stufen schaltbaren Anlasserwiderstände im Rotorkreis der Asynchronmaschine mit zugehörigen Rotorumschaltschützen überflüssig werden. Ein Spannungsbegrenzungswiderstand mit zugehörigem Thyristorschalter parallel zu den Stromrichtern ist nicht erforderlich. Das Anlaufdrehmoment bleibt bis etwa 60 % ... 80 % der Nenndrehzahl der Asynchronmaschine konstant, was vom Antrieb her wesentlich günstiger ist als ein abnehmendes Drehmoment beim Anlauf, da der Umrichter für eine kleinere Leistung dimensioniert werden kann. Der Strom im Gleichstromzwischenkreis wird beim Anfahren konstant gehalten.

Gemäss einer vorteilhaften Ausgestaltung der Erfindung kann ein erhöhter Energieverbrauch innerhalb eines Drehzahlbereiches, in dem der netzseitige Stromrichter im Gleichstrombetrieb arbeitet, verringert werden, indem anstelle eines kurzschliessbaren Zwischenkreiswiderstandes zwei oder mehrere kurzschliessbare Zwischenkreiswiderstände verwendet werden.

Besonders vorteilhaft ist es, zum Kurzschliessen der Zwischenkreiswiderstände ausschaltbare Thyristoren zu verwenden, so daß die Stromrichterkaskade schaltfest ist und ohne Schaltkontakte auskommt.

Die Erfindung wird nachstehend anhand eines Ausführungsbeispiels erläutert. Es zeigen:

Fig. 1 ein Schaltbild einer untersynchronen Stromrichterkaskade,

Fig. 2 ein Diagramm, in dem drei Spannungssignale des Umrichters der Stromrichterkaskade gemäss Fig. 1 in Abhängigkeit von einer bezogenen Drehzahl des Asynchronmotors dieser Stromrichterkaskade dargestellt sind, und

Fig. 3 ein Diagramm, das den Statorstrom der Asynchronmaschine und den Gleichstrom im Gleichstromzwischenkreis des Umrichters der Stromrichterkaskade gemäss Fig. 1 in Abhängigkeit von der bezogenen Drehzahl des Asynchronmotors dieser Stromrichterkaskade darstellt.

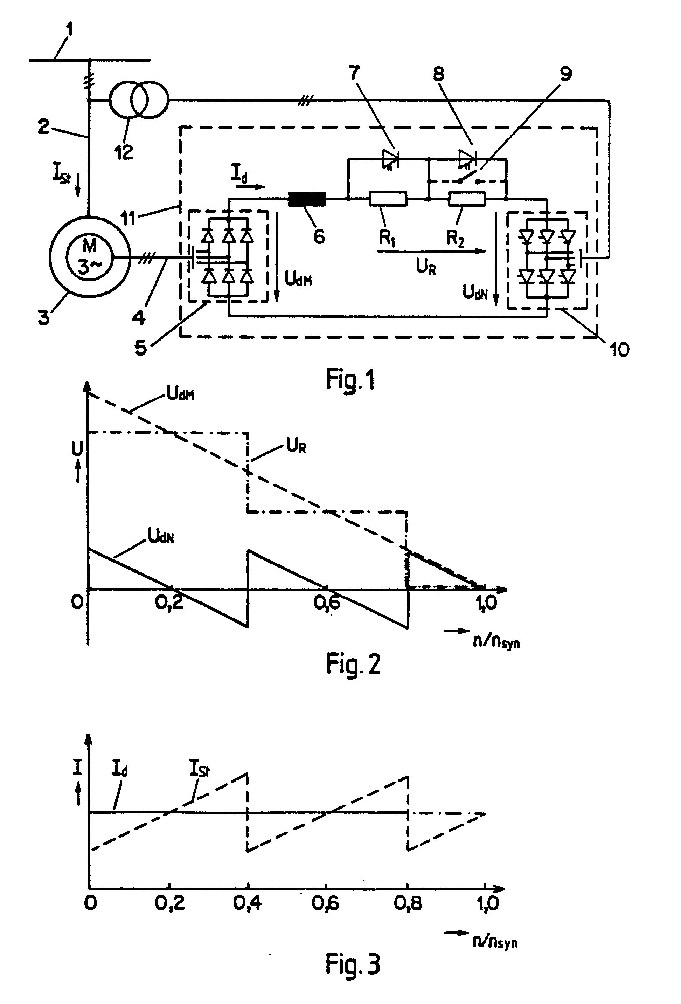

In Fig. 1 ist mit 1 ein 3phasiges Stromversorgungsnetz bezeichnet, das einerseits über eine 3phasige Statorzuleitung 2 mit den Stator- oder Feldwicklungen einer Asynchronmaschine bzw. eines Asynchronmotors 3 mit Schleifringläufer und andererseits mit der Sekundärwicklung eines 3phasigen Rückspeisetransformators 12 in Verbindung steht. Die Rotorwicklungen der Asynchronmaschine 3 sind über eine 3phasige Rotorzuleitung 4 mit dem Wechselspannungseingang eines motorseitigen Stromrichters 5 eines Umrichters 11 mit Gleichstromzwischenkreis verbunden. Der motorseitige Stromrichter 5 ist als 3phasiger Brückengleichrichter mit Dioden in den Brückenzweigen ausgeführt. Der Umrichter 11 weist ferner einen netzseitigen Stromrichter 10 auf, der als 3phasige Brückenschaltung mit Thyristoren in den Brückenzweigen ausgeführt ist, wobei die Wechselspannungsseite dieser Brückenschaltung mit der Primärwicklung des Rückspeisetransformators 12 verbunden ist. Die gleichstromseitigen Anoden der Dioden des Stromrichters 10 sind mit den gleichstromseitigen Kathoden der Thyristoren des Stromrichters 11 verbunden. Die gleichstromseitigen Kathoden des Stromrichters 10 stehen über eine Zwischenkreisdrossel 6 in Reihe mit zwei hintereinandergeschalteten, gleich grossen ohmschen Zwischenkreiswiderständen $R_1$ und $R_2$ mit den gleichstromseitigen Anoden der Thyristoren des Stromrichters 11 in Verbindung. Parallel zum Zwischenkreiswiderstand $R_1$ ist ein abschaltbarer Thyristor 7 geschaltet und parallel zu dem Zwischenkreiswiderstsnd $R_2$ ein abschaltbarer Thyristor 8 sowie mit gestrichelt gezeichneten Anschlüssen ein Schalter 9, der alternativ anstelle des Thyristors 8 eingesetzt werden kann. Ein derartiger Schalter kann auch anstelle des Thyristors 7 verwendet werden.

$I_{St}$ bezeichnet den Statorstrom und $I_d$ den Gleichstrom im Gleichstromzwischenkreis. Mit $U_R$ ist der Spannungsabfall an den Zwischenkreiswiderständen $R_1$ und $R_2$ bezeichnet, mit $U_{dM}$ die Gleichspannung am motorseitigen Stromrichter 5 und mit $U_{dN}$ die Gleichspannung am netzseitigen Stromrichter 10. Dabei gilt:

$$-U_{dM} + U_R + U_{dN} = 0.$$

Die Betriebsweise der Stromrichterkaskade gemäss Fig. 1 beim Anfahren des Asynchronmotors 3 soll nun anhand der Figuren 2 und 3 erläutert werden, in denen I den Strom, U die Spannung, n die Rotordrehzahl des Asynchronmotors 3 und $n/n_{syn}$ die auf die Synchrondrehzahl $n_{syn}$ bezogene Drehzahl bedeuten.

Beim Anfahren sind zunächst die Thyristoren 7 und 8 nichtleitend bzw. der Schalter 9 geöffnet. An den Zwischenkreiswiderständen fällt die volle Spannung $U_R$ ab. Der netzseitige Stromrichter 10 wird in seine Wechselrichter-Endlage gesteuert, entsprechend der tiefsten Drehzahl des Regelbereiches. Mit zunehmendem Hochlauf des Asynchronmotors 3 wird der Stromrichter 10 so geregelt, daß der Anfahrstrom und damit der Gleichstrom $I_d$ im Gleichstromzwischenkreis des Umrichters 11 auf einem vorgebbaren Wert konstant gehalten wird. Dabei wird der Stromrichter 10 immer mehr in Richtung auf Gleichrichterbetrieb gefahren, wie die ausgezogen dargestellte Linie für $U_{dN}$ in Fig. 2 zeigt. Dabei nimmt der Statorstrom $I_{St}$ zu, was der gestrichelt gezeichneten Linie in Fig. 3 zu entnehmen ist. Zur Regelung des Stromrichters kann eine übliche Regelschaltung verwendet werden, wie sie z. B. in der BBC-Firmen-Druckschrift Nr. D HS 90023 D, BBC Veritron-Stromrichtergeräte, beschrieben ist.

Im dargestellten Beispiel endet der Regelbereich des Stromrichters 10 bei $n/n_{syn}$ = 0,4. Bei der diesem Wert entsprechenden Rotordrehzahl n wird der Zwischenkreiswiderstand $R_1$ (oder $R_2$) durch Zünden des Thyristors 7 (oder 8)

kurzgeschlossen, so daß der Spannungsabfall $U_R$ an den Widerständen $R_1$ und $R_2$ auf die Hälfte sinkt. Gleichzeitig wird der Stromrichter 10 wieder in seine Wechselrichter-Endlage zurückgesteuert. Mit zunehmendem Hochlauf des Asynchronmotors 3 wird der Stromrichter 10 wieder in Richtung auf Gleichrichterbetrieb gefahren und dadurch der Gleichstrom $I_d$ im Gleichstromzwischenkreis konstant gehalten bis zu dem Wert $n/n_{syn} = 0,8$, an dem der Regelbereich des Stromrichters 10 wieder endet. Bei diesem Wert der bezogenen Drehzahl wird der Zwischenkreiswiderstand $R_2$ (oder $R_1$) durch Zünden des Thyristors 7 (oder 8) bzw. Schliessen des Schalters 9 kurzgeschlossen und der Stromrichter 10 gleichzeitig wieder in seine Wechselrichter-Endlage gesteuert. Im anschliessenden Bereich von $0,8 \leqslant n/n_{syn} \leqslant 1,0$ erfolgt die Drehzahlregelung nur über den Stromrichter 10. Der Verlauf von $I_d$ ist in Fig. 3 in diesem Bereich strichpunktiert gezeichnet, er braucht hier nicht mehr konstant zu sein.

In den Anfahrbereichen $0 \leqslant n/n_{syn} \leqslant 0,2$ und $0,4 \leqslant n/n_{syn} \leqslant 0,6$ arbeitet der Stromrichter 10 im Wechselrichterbetrieb, wobei Energie über den Rückspeisetransformator 12 ins Stromversorgungsnetz 1 gespeist wird. In den Anfahrbereichen $0,2 \leqslant n/n_{syn} \leqslant 0,4$ und $0,6 \leqslant n/n_{syn} \leqslant 0,8$ arbeitet der Stromrichter 10 im Gleichrichterbetrieb, wobei zusätzlicher Strom aus dem Stromversorgungsnetz 1 bezogen wird, um $I_d$ konstant zu halten.

Es versteht sich, daß anstelle von zwei Zwischenkreiswiderständen $R_1$, $R_2$ auch mit nur einem Zwischenkreiswiderstand gearbeitet werden kann, der z. B. bei $n/n_{syn} = 0,7$ kurzgeschlossen wird. Selbstverständlich können auch mehr als zwei Zwischenkreiswiderstände vorgesehen sein und mit zunehmender Drehzahl nacheinander kurzgeschlossen werden. Anstelle von abschaltbaren Thyristoren 7, 8 können zum Kurzschliessen auch einfache Thyristoren vorgesehen werden, da ein stromloses Ausschalten möglich ist. Es können dafür auch Schaltkontakte verwendet werden, da sie schnell genug sind für den vorgesehenen Zweck. Aus Schutzgründen ist es jedoch erwünscht, daß die Thyristoren auch ausschaltbar sind.

Das erfindungsgemässe Verfahren ist selbstverständlich nicht auf 3phasige Stromrichterkaskaden beschränkt, da die zum Anfahren verwendeten Zwischenkreiswiderstände im Gleichstromzwischenkreis angeordnet sind und das Kurzschliessen dieser Zwischenkreiswiderstände somit unabhängig ist von der Phasenzahl des Stromversorgungsnetzes.

## Patentansprüche

1. Verfahren zum Anfahren einer untersynchronen Stromrichterkaskade mit einer Asynchronmaschine mit Schleifringläufer (3), bei der im untersynchronen Betrieb freiwerdende Schlupfleistung über einen Umrichter mit Gleichstromzwischenkreis einem Stromversorgungsnetz (1) zugeführt wird, wobei während des Anfahrens der Umrichter und ein Teil der Schlupfenergie aufnehmenden Widerstände so geregelt werden, daß der Gleichstrom ($I_d$) im Gleichstromzwischenkreis des Umrichters (11) im wesentlichen konstant gehalten wird, dadurch gekennzeichnet,

a) daß unter Verwendung mindestens eines ohmschen Zwischenkreiswiderstandes ($R_1$, $R_2$) im Gleichstromzwischenkreis des Umrichters (11) der netzseitige Stromrichter (10) des Umrichters (11) vom Wechselrichterbetrieb in den Gleichrichterbetrieb übergeht und anschliessend wieder in die Endlage des Wechselrichterbetriebes umgesteuert wird,

b) daß gleichzeitig mit dieser Umsteuerung ein ohmscher Zwischenkreiswiderstand ($R_1$, $R_2$) kurzgeschlossen wird und

c) daß danach der netzseitige Stromrichter wieder auf konstanten Gleichstrom ($I_d$) im Gleichstromzwischenkreis des Umrichters (11) geregelt wird.

2. Verfahren nach Anspruch 1, dadurch gekennzeichnet,

a) daß während des Anfahrens nacheinander mehrere Umsteuerungen des netzseitigen Stromrichters (10) vom Wechselrichterbetrieb in den Gleichrichterbetrieb vorgenommen werden,

b) wobei jeweils gleichzeitig ein ohmscher Zwischenkreiswiderstand ($R_1$, $R_2$) im Gleichstromzwischenkreis des Umrichters (11) kurzgeschlossen wird.

3. Verfahren nach Anspruch 1 oder 2, dadurch gekennzeichnet, daß das Kurzschliessen des Zwischenkreiswiderstandes ($R_1$, $R_2$) durch Zünden eines Thyristors (7, 8) erfolgt, der zu dem Zwischenkreiswiderstand parallelgeschaltet ist.

4. Verfahren nach Anspruch 3, dadurch gekennzeichnet, daß der Thyristor (7, 8) ein abschaltbarer Thyristor ist.

5. Verfahren nach einem der vorhergehenden Ansprüche, dadurch gekennzeichnet, daß das Anlaufdrehmoment der Asynchronmaschine (3) bis zu einer Rotordrehzahl (n) im Bereich von 60 % bis 80 % der Synchrondrehzahl ($n_{syn}$) konstant gehalten wird.

## Claims

1. Method for starting a subsynchronous static converter cascade comprising an asynchronous machine with slipring rotor (3), in which slip power released in subsynchronous operation is supplied to a power supply system (1) via a frequency converter with direct-current link circuit, in which arrangement, during the starting, the frequency converter and a part of the resistances accepting the slip energy are regulated in such a manner that the direct current ($I_d$) in the direct-current link circuit of the frequency converter (11) is essentially kept constant, characterized in that

a) using at least one ohmic link circuit resistance ($R_1$, $R_2$) in the direct-current link circuit of the frequency converter (11), the static converter (10) on the power system side of the frequency converter (11) changes from inverter operation to rectifier operation and is subsequently reversed back to the final position of inverter operation,

b) at the same time with this reversal, an ohmic link-circuit resistance ($R_1$, $R_2$) is short circuited, and

c) thereafter the static converter on the power system side is regulated back to constant direct current ($I_d$) in the direct-current link circuit of the frequency converter (11).

2. Method according to claim 1, characterized in that

a) during the starting, several reversals of the static converter (10) on the power system side from inverter operation to rectifier operation are successively performed,

b) during which process, in each case an ohmic link-circuit resistance ($R_1$, $R_2$) in the direct-current link circuit of the frequency converter (11) is at the same time short circuited.

3. Method according to claim 1 or 2, characterized in that the link-circuit resistance ($R_1$, $R_2$) is short circuited by firing a thyristor (7, 8) which is connected in parallel with the link-circuit resistance.

4. Method according to claim 3, characterized in that the thyristor (7, 8) is a gate turn-off thyristor.

5. Method according to one of the preceding claims, characterized in that the starting torque of the asynchronous machine (3) is kept constant up to a rotor speed (n) within the range of 60 % to 80 % of the synchronous speed ($n_{syn}$).

**Revendications**

1. Procédé pour démarrer un convertisseur statique sous-synchrone en cascade comportant une machine asynchrone à rotor à bagues (3) dans lequel la puissance de glissement dégagée dans le mode sous-synchrone est renvoyée au réseau d'alimentation de courant (1) par l'intermédiaire d'un mutateur à circuit intermédiaire à courant continu, étant entendu que pendant le démarrage, le mutateur et une partie des résistances absorbant l'énergie de glissement, sont réglés de telle façon que le courant continu $I_d$ soit maintenu essentiellement constant dans le circuit intermédiaire à courant continu du mutateur (11), caractérisé en ce que:

a) avec l'aide d'au moins une résistance de circuit intermédiaire ohmique ($R_1$ et $R_2$) dans le circuit intermédiaire à courant continu du mutateur (11), le convertisseur statique du côté réseau (10) du mutateur (11) passe du mode onduleur au mode redresseur puis est à nouveau inversé dans l'état terminal du mode d'onduleur;

b) au moment même de cette inversion, une résistance de circuit intermédiaire ohmique ($R_1$, $R_2$) est court-circuitée, et

c) ensuite, le convertisseur statique du côté réseau est réglé à nouveau sur un courant continu constant ($I_d$) dans le circuit intermédiaire à courant continu du mutateur (11).

2. Procédé suivant la revendication 1, caractérisé en ce que:

a) pendant le démarrage, plusieurs inversions successives du convertisseur statique du côté réseau (10) du mode d'onduleur au mode de redresseur sont effectuées;

b) et en même temps, une résistance de circuit intermédiaire ohmique ($R_1$, $R_2$) est court-circuitée chaque fois dans le circuit intermédiaire à courant continu du mutateur (11).

3. Procédé suivant la revendication 1 ou 2, caractérisé en ce que la mise en court-circuit de la résistance de circuit intermédiaire ($T_1$, $R_2$) est effectuée par un allumage d'un thyristor (7, 8) qui est connecté en parallèle à la résistance de circuit intermédiaire.

4. Procédé suivant la revendication 3, caractérisé en ce que le thyristor (7, 8) est un thyristor pouvant être mis hors circuit.

5. Procédé suivant l'une quelconque des revendications précédentes, caractérisé en ce que le couple de démarrage de la machine asynchrone (3) est maintenu constant jusqu'à une vitesse de rotation de rotor (n) comprise entre 60 % et 80 % de la vitesse de rotation synchrone ($n_{syn}$).

Fig. 1

Fig. 2

Fig. 3

1